# EUROPEAN PATENT APPLICATION

(11) **EP 3 067 536 A1**
(43) Date of publication of application: **14.09.2016**
(21) Application number: 15158140.2
(22) Date of filing: 09.03.2015
(51) Int. Cl.: F02C 9/28, F02C 9/34, F02C 9/52, F02C 9/54

(54) **Method for operating a gas turbine**

(71) Applicant: General Electric Technology GmbH, 5400 Baden (CH)
(72) Inventor: Sorato, Sebatiano, 8002 Zürich (CH); Grimm, Frank, 5400 Baden (CH); Magni, Fulvio, 5415 Nussbaumen (CH)
(74) Representative: Bernotti, Andrea

(57) **Abstract**

The method for operating a gas turbine comprises controlling an oxidizer supply to the gas turbine combustion chamber and/or a fuel supply to the gas turbine combustion chamber in order to maintain the flame temperature or a parameter indicative thereof within a given range.

## Description

### TECHNICAL FIELD

The present invention relates to a method for operating a gas turbine. Preferably the gas turbine is part of a combined cycle power plant.

### BACKGROUND

Gas turbines of power plants are typically designed for operation with high efficiency and reduced emissions at high load (e.g. between 60-100% of the gas turbine nominal load). Operation at low load implies high emissions, but since operation at low load is an exception and is to be carried out only for limited time, these high emissions are accepted.

Currently gas turbines have to operate together with renewable power plants; this requires more flexibility to gas turbines and generally the need for the gas turbines to operate at low load for long time; this renders operation at low load with high emissions not acceptable any longer.

### SUMMARY

An aspect of the invention includes providing a method that permits gas turbine operation at low load with acceptable emissions.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figure 1 shows the VIGV opening/compressor blade stress relationship in a regulation window according to the prior art;
Figure 2 shows the VIGV opening/compressor blade stress relationship in a regulation window according to the invention;
Figure 3 shows an example of a combined cycle power plant;
Figures 4 through 6 show the combustion chamber and its main components.

### DETAILED DESCRIPTION OF EXEMPLARY EMBODIMENTS

In the following the gas turbine and the combined cycle power plant the gas turbine is part of are described first.

The gas turbine 1 comprises a compressor 2, a combustion chamber 3 and a turbine 4.

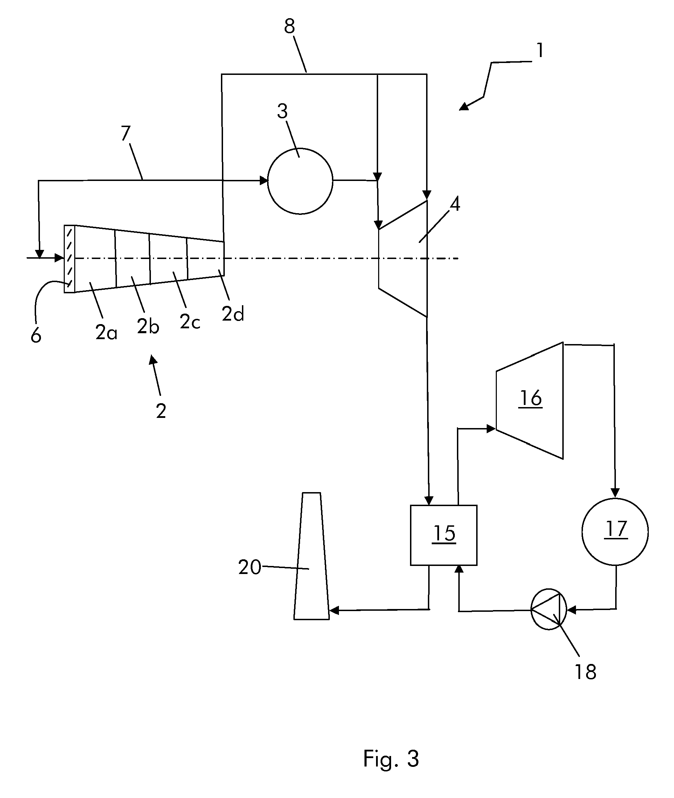

The compressor 2 has variable inlet guide vanes 6, which comprise vanes whose position can be adjusted, for adjusting the flow of oxidizer, such as air, entering the compressor. Downstream of the variable inlet guide vanes 6, the compressor 2 has a number of compressor stages 2a, 2b, 2c, 2d, typically each comprising vanes and blades. The number of compressor stages depends on the specific needs; for example figure 3 shows four compressor stages, it is anyhow clear that the compressor 2 can have less than four stages or more than four stages, such as ten stages or even more.

Downstream of the compressor 2 the gas turbine can have a recirculation line 7, for recirculating a part of the compressed air back to a position upstream of the compressor 2.

In addition, a bypass 8 can be provided to bypass a part of the compressed air downstream of the combustion chamber 3; e.g. the compressed air can be forwarded upstream of the turbine 4 and/or downstream of the turbine 4 and/or at an intermediate stage of the turbine 4.

Downstream of the compressor 2 the gas turbine 1 has the combustion chamber 3. The combustion chamber 3 is preferably a premixed combustion chamber (i.e. a combustion chamber adapted for combusting the fuel in premixed conditions). The combustion chamber 3 has a combustor 9 connected to one or typically more than one burners 10. During operation the fuel is supplied into the burners 10 together with air to form a mixture, the mixture passes then from the burners 10 into the combustor 9 where it is combusted.

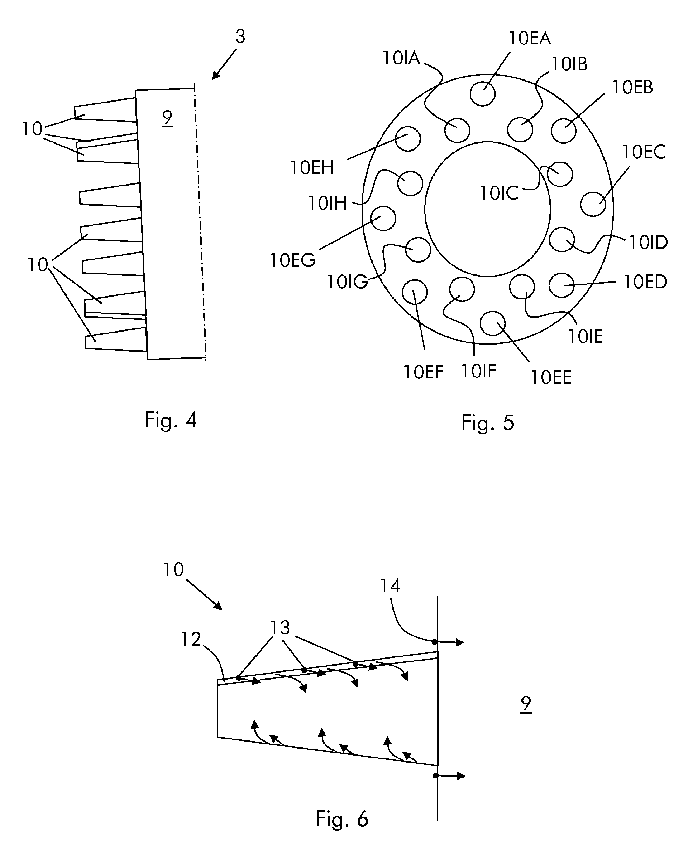

Figure 6 shows an example of the burner. The burner can have a cone shape, with slots 12 for air entrance and premixing fuel injectors 13 adjacent the slots 12.

In addition, the burners 10 can also have pilot fuel injectors 14 for injecting fuel directly into the combustor 9 (but the pilot fuel injectors 14 are optional); the pilot fuel injected via the pilot fuel injectors 14 undergoes diffusion combustion. The pilot fuel injectors 14 can be located around each burner 10, e.g. over a circumference.

Downstream of the combustion chamber 3 the gas turbine 1 has the turbine 4 that expands the hot gas generated in the combustion chamber to collect mechanical energy, e.g. to activate an electrical generator (not shown).

Figure 3 shows an example of a combined cycle power plant that further includes a boiler 15 receiving exhaust gas discharged from the turbine 4 to evaporate water and generate superheated steam. The superheated steam is expanded in a steam turbine 16 to collect further mechanical energy, e.g. used to activate an electrical generator (the same electrical generator connected to the gas turbine or a different electrical generator).

Connected downstream of the steam turbine 16, there is a condenser 17, for condensing the steam, and a pump 18 for forwarding the water derived from condensation to the boiler 15.

The exhaust gas after passing through the boiler 15 are sent to a stack 20 and discharged into the atmosphere.

In order to control the load of the turbine (and thus of the whole combined cycle power plant) typically the mass flow through the gas turbine is controlled and adjusted via the variable inlet guide vanes 6. By way of this control, the air mass flow through the gas turbine is regulated together with the fuel amount supplied into the combustion chamber, such that the gas turbine load is regulated and the combustion occurs efficiently, with limited emissions.

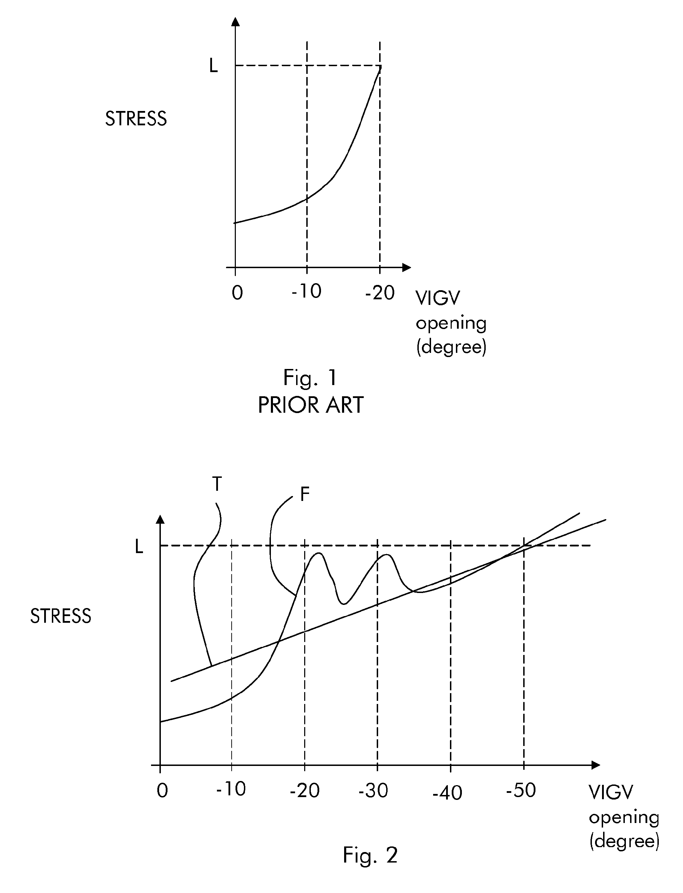

Adjusting the variable inlet guide vanes 6 causes, in addition to adjusting the mass flow, high stress in the compressor blades downstream of the variable inlet guide vanes 6. The stress increases when the opening of the variable inlet guide vanes 6 is reduced (i.e. the amount of air through the gas turbine is reduced). For this reason traditionally the regulation of the variable inlet guide vanes 6 is done only in a limited opening range, e.g. in an opening range between 0 - -20° in order to limit the stress of the compressor blades (0° indicates the reference position with maximum opening and -20° indicates a position closed by 20° with respect to the reference position). For example figure 1 shows the relationship between variable inlet guide vanes (VIGV) opening and stress.

In figure 1, L indicates the stress limit for the compressor blades above which reliable operation is not possible any longer.

Traditionally, further load regulation of the gas turbine (i.e. regulation beyond regulation with variable inlet guide vanes 6 with opening set to e.g. -20°) is done by only regulating the fuel supply into the combustion chamber on the basis of the hot gas temperature within the combustion chamber 3 (or the exhaust gas temperature downstream of the turbine that is indicative of the hot gas temperature within the combustion chamber 3), without any air regulation. This regulation bears the risk of reaching the lean blow off conditions in case a too small amount of fuel is fed to the gas turbine.

The inventors have found a way to control the load in a broad range (e.g. beyond regulation with variable inlet guide vanes 6) while maintaining the gas turbine operation complying with the emissions requirements and apart from combustion instabilities such as the lean blow off conditions.

In addition to the traditional control based on the hot gas temperature within the combustion chamber and/or exhaust gas temperature after the turbine (this temperature is anyway indicative of the hot gas temperature within the combustion chamber), the inventors have envisaged the advantage of controlling the flame temperature or a parameter indicative thereof.

The method comprises (once the fuel amount to be supplied to the combustion chamber is defined on the basis of the load) controlling an oxidizer supply to the combustion chamber and/or a fuel supply to the combustion chamber in order to maintain the flame temperature or a parameter indicative thereof within a given range. The given range is a range that allows correct combustion, with limited emissions and reduced risk of flame extinction.

Controlling the oxidizer supply to the combustion chamber 3 preferably comprises controlling: a variable inlet guide vane opening and/or an oxidizer recirculation to the compressor 2 and/or an oxidizer bypass downstream of the combustion chamber 3.

In a first embodiment of the invention, controlling the fuel supply to the combustion chamber comprises discontinuing the premixing fuel supply to some burners 10 and increasing the premixing fuel supply to other burners 10.

This way only some of the burners (the operating ones) operate; these burners operate with a correct fuel/oxidizer ratio, generating a flame with a sufficiently high temperature within the given range, to maintain the emissions within the required values and prevent combustion instabilities such as lean blow off conditions, but the total amount of fuel supplied into the combustion chamber 3 is limited according to the low load conditions. The other burners do not operate, i.e. they are not supplied with fuel.

In particular, increasing the premixing fuel supply can be carried out while maintaining substantially constant the total amount of fuel supplied to the gas turbine (because the fuel amount defines the load).

Preferably, premixing fuel of circumferentially adjacent burners is increased; this way the blades of the turbine downstream of the combustion chamber 3 are exposed to hot gas having a temperature that is circumferentially substantially uniform.

For example, with reference to figure 5, the fuel supply to the burners 10IA-10IH can be discontinued, while the fuel supply to the burners 10EA-10EH is increased of the same amount.

In this case, in order to reduce cold zones in the combustion chamber 3, for each burner 10, the pilot fuel feed (when provided) is preferably not discontinued when the premixing fuel supply is discontinued. Thus with reference to figure 5, for the burners 10IA-10IH the supply of premixing fuel is discontinued while the supply of pilot fuel is not discontinued and the amount of premixing fuel supplied to the burners 10EA-10EH is increased of the same amount as the amount of the premixing fuel discontinued from the burners 10IA-10IH.

In a second embodiment, controlling the oxidizer supply to the combustion chamber comprises recirculating a part of the compressed oxidizer from downstream of the compressor 2 to the compressor 2 (i.e. upstream of the compressor or at the compressor, e.g. between the first stage and the last stage of the compressor 2) via the recirculation line 7.

In fact the amount of flow that passes through the compressor 2 must have a minimum amount, in order to allow safe and reliable operation of the compressor; therefore recirculation of the air allows forwarding to the combustion chamber (and to the turbine) a reduced amount of air while maintaining a correct amount of air through the compressor 2.

In a third embodiment, controlling the oxidizer supply to the combustion chamber 3 comprises bypassing a part of the compressed oxidizer from the compressor 2 to downstream of the combustion chamber 3 via the bypass 8.

In a fourth embodiment:
- the variable inlet guide vanes opening is controlled between a minimum opening (0°) and a maximum opening (e.g. -50°),
- a function F indicative of the mechanical stress undergone by the compressor blades downstream of the variable inlet guide vanes 6 has an increasing line trend T from the maximum opening to the minimum opening of the variable inlet guide vanes 6; the function F can be measured, e.g. via deformation sensors applied on the blades and connected to radio transmitters,

- the function F is smaller than a stress limit L, wherein at or below the stress limit L the gas turbine can reliably continuously operate and above the stress limit the gas turbine cannot reliably continuously operate,
- between the maximum opening and the minimum opening of the variable inlet guide vanes 6, the function F indicative of the mechanical stress is a non-monotonic function.

Thus according to the method, even if opening is reduced up to -40° or more such as e.g. -50°, operation always takes place in reliable conditions, because the stress limit is not overcome thanks to the particular non monotonic behaviour of the stress-VIGV opening relationship.

In different embodiments, the function F indicative of the mechanical stress undergone by compressor blades downstream of the variable inlet guide vanes is indicative of the stress of the blades of the second compressor stage 2b and/or of the third compressor stage 2c; it was ascertained that at these compressor stages the stress is higher.

In the following some examples of operation of a gas turbine are described.

### EXAMPLE 1

In the first example the gas turbine is regulated in a load range between 100%-60% of the nominal power by regulating the VIGV opening on the basis of the temperature downstream of the turbine (traditional regulation).

In addition, the gas turbine is regulated in a load range between e.g. 60%-40% of the nominal power by controlling the fuel supplied into the combustion chamber and the discontinuation/increase of the premixing fuel supply to the burners 10 on the basis of the flame temperature (first embodiment described above).

### EXAMPLE 2

In the second example the gas turbine is regulated in a load range between 100%-60% of the nominal power by regulating the VIGV opening (e.g. in a range 0° - -20°) on the basis of the temperature downstream of the turbine (traditional regulation).

The gas turbine is further regulated in a load range between e.g. 60%-40% of the nominal power by controlling the fuel supplied into the combustion chamber and the VIGV opening beyond -20° (opening beyond -20° means that the opening is smaller than for a 0° opening; e.g. the control is done in a VIGV opening between -20° - -50°) on the basis of the flame temperature (fourth embodiment described above).

### EXAMPLE 3

In the third example the gas turbine is regulated in a load range between 100%-60% of the nominal power by regulating the VIGV opening (e.g. in a range 0° - -20°) on the basis of the temperature downstream of the turbine (traditional regulation).

The gas turbine is further regulated in a load range between e.g. 60%-40% of the nominal power by controlling the fuel supplied into the combustion chamber and the amount of compressed oxidizer that is recirculated (second embodiment above) or is bypassed (third embodiment above) on the basis of the flame temperature.

### EXAMPLE 4

In the fourth embodiment the control method described above are integrated in order to regulate the gas turbine operation in a broad operating range.

The gas turbine is regulated in a load range between 100%-60% of the nominal power by regulating the variable inlet guide vane opening (e.g. in a range 0° - -20°) on the basis of the temperature downstream of the turbine (traditional regulation).

The gas turbine is further regulated in a load range between e.g. 60%-40% by controlling the fuel supplied into the combustion chamber and the variable inlet guide vane opening beyond -20 on the basis of the flame temperature.

The gas turbine can be further regulated in a load range between e.g. 40%-30% of the nominal power by controlling the fuel supplied into the combustion chamber and the discontinuation/increase of the premixing fuel supply to the burners 10 on the basis of the flame temperature.

The gas turbine can be further regulated in a load range between 30%-20% by controlling the fuel supplied into the combustion chamber and the amount of compressed oxidizer that is recirculated and/or is bypassed on the basis of the flame temperature.

In additional examples, the gas turbine can be regulated according to any control embodiments or combination of control embodiments described above.

Naturally the features described may be independently provided from one another.

### REFERENCE NUMBERS

- 1: gas turbine
- 2: compressor
- 2a-d: compressor stages
- 3: combustion chamber
- 4: turbine
- 6: variable inlet guide vanes
- 7: recirculation line
- 8: bypass
- 9: combustor
- 10: burner
- 10EA-10EH: burners
- 10IA-10IH: burners
- 12: slot
- 13: premixing fuel injectors
- 14: pilot fuel injectors
- 15: boiler
- 16: steam turbine
- 17: condenser
- 18: pump
- 20: stack
- F: function indicative of the mechanical stress
- L: stress limit
- T: line trend

## Claims

1. A method for operating a gas turbine (1) comprising a compressor (2), a combustion chamber (3) and a turbine (4), **characterized by** controlling an oxidizer supply to the combustion chamber (3) and/or a fuel supply to the combustion chamber (3) maintaining the flame temperature or a parameter indicative thereof within a given range.

2. The method of claim 1, **characterized in that** controlling the oxidizer supply to the combustion chamber (3) comprises controlling a variable inlet guide vane opening and/or an oxidizer recirculation to the compressor (2) and/or an oxidizer bypass downstream of the combustion chamber (3).

3. The method of claim 1, **characterized in that** the combustion chamber (3) has a combustor (9) connected to a number of burners (10), wherein a premixing fuel and an oxidizer are supplied to the burners (10) and are mixed together generating a mixture, which is forwarded into the combustor (9) and is combusted,
wherein controlling the fuel supply to the combustion chamber (3) comprises discontinuing the premixing fuel supply to some burners (10) and increasing the premixing fuel supply to other burners (10).

4. The method of claim 3, **characterized by** maintaining substantially constant the total amount of fuel supplied to the gas turbine (1) when discontinuing the fuel supply to some burners (10) and increasing the premixing fuel supply to other burners (10).

5. The method of claim 3, **characterized by** increasing premixing fuel of circumferentially adjacent burners (10).

6. The method of claim 3, **characterized in that** the burners (10) are fed with a pilot fuel that is supplied into the combustion chamber (3) without premixing with the oxidizer,
for at least one burner, the pilot fuel is not discontinued when the premixing fuel supply is discontinued.

7. The method of claim 1 or 3, **characterized in that** the compressor (2) compresses the oxidizer that is then supplied into the combustion chamber (3), wherein controlling the oxidizer supply to the combustion chamber comprises recirculating a part of the compressed oxidizer from downstream of the compressor (2) to the compressor (2).

8. The method of claim 1 or 3, **characterized in that** the compressor (2) compresses the oxidizer that is then supplied into the combustion chamber (3), wherein controlling the oxidizer supply to the combustion chamber comprises bypassing a part of the oxidizer downstream of the combustion chamber (3).

9. The method of claim 1, **characterized in that** the gas turbine (1) has variable inlet guide vanes (6),
a function (F) indicative of the mechanical stress undergone by compressor blades downstream of the variable inlet guide vanes (6) has an increasing line trend (T) from the maximum opening to the minimum opening of the variable inlet guide vanes (6), the function (F) indicative of the mechanical stress undergone by the compressor blades downstream of the variable inlet guide vanes (6) is smaller than a stress limit (L),
at or below the stress limit L the gas turbine can reliably continuously operate and above the stress limit the gas turbine cannot reliably continuously operate,
between the maximum opening and the minimum opening of the variable inlet guide vanes (6), the function (F) indicative of the mechanical stress is a non-monotonic function.

10. The method of claim 9, **characterized in that** the compressor (2) has a number of compressor stages (2a, 2b, 2c, 2d),
the function (F) indicative of the mechanical stress undergone by compressor blades downstream of the variable inlet guide vanes (6) is indicative of the stress of the blades of a second compressor stage (2b).

11. The method of claim 9, **characterized in that** the compressor (2) has a number of compressor stages (2a, 2b, 2c, 2d),
the function (F) indicative of the mechanical stress undergone by compressor blades downstream of the variable inlet guide vanes (6) is indicative of the stress of the blades of a third compressor stage (2c).

12. The method of claim 1, **characterized in that** the gas turbine (1) is part of a combined cycle power plant.

13. The method of claim 1, **characterized by** supplying the combustion chamber (3) with a fuel amount on the basis of the load.
